# EUROPEAN PATENT APPLICATION

(11) **EP 1 806 806 A1**
(43) Date of publication of application: **11.07.2007**
(21) Application number: 05782093.8
(22) Date of filing: 08.09.2005
(51) Int. Cl.: H01M 10/40, H01M 4/02, H01M 4/38, H01M 4/66

(54) **NON-AQUEOUS ELECTROLYTE SECONDARY BATTERY AND NON-AQUEOUS ELECTROLYTE**

(30) Priority: 17.09.2004 JP 2004271042
(71) Applicant: SANYO ELECTRIC CO., LTD., Moriguchi-shi, Osaka 570-8677 (JP); MITSUBISHI CHEMICAL CORPORATION, Tokyo 108-0014 (JP)
(72) Inventor: TAMURA, Noriyuki, SANYO ELECTRIC CO., LTD., Moriguchi-shi, Osaka 570-8677 (JP); KAMINO, Maruo, SANYO ELECTRIC CO., LTD., Moriguchi-shi, Osaka 570-8677 (JP); TAKEHARA, Masahiro, Mitsubishi Chemical Group, Ina shiki-gun, Ibaraki 300-0332 (JP); KOTATO, Miwa, Mitsubishi Chemical Group, Ina shiki-gun, Ibaraki 300-0332 (JP)
(74) Representative: Glawe, Delfs, Moll
(86) International application number: PCT/JP2005/016484
(87) International publication number: WO 2006/030681

(57) **Abstract**

To provide a non-aqueous electrolyte secondary battery which restrict reaction between a negative electrode active material and a non-aqueous electrolyte, and can attain excellent charge-discharge cycle performances and high charge-discharge capacity, where a thin filmof negative electrode activematerial including a metal capable of absorbing or releasing lithium is formed on a current collector of the non-aqueous electrolyte secondary battery, and the thin filmof negative electrode active material is separated into columnar shape by slits formed in a thickness direction. In the non-aqueous electrolyte secondary battery that comprises a negative electrode 2, in which a thin film of negative electrode active material 2a including a metal capable of absorbing or releasing lithium is formed on a current collector 2b and this thin film of negative electrode active material 2a is separated into columnar shape by slits 2c formed in a thickness direction, a positive electrode 1 containing a positive electrode active material capable of absorbing or releasing lithium, and a non-aqueous electrolyte prepared by dissolving lithium salt in a non-aqueous solvent, the non-aqueous electrolyte contains carbonate compound having alkyl group combined with fluorine.

## Description

### TECHNICAL FIELD

The present invention relates to a non-aqueous electrolyte secondary battery comprising a negative electrode containing a thin film of negative electrode active material including a metal capable of absorbing or releasing lithium formed on a current collector; a positive electrode containing a positive electrode active material capable of absorbing or releasing lithium; and a non-aqueous electrolyte prepared by dissolving lithium salt in a non-aqueous solvent; wherein said thin film of negative electrode active material is separated into columnar shape by slits formed in a thickness direction. More particularly, a feature of the invention is to improve the non-aqueous electrolyte used in the non-aqueous electrolyte secondary battery to prevent degradation of the negative electrode caused by charge-discharge performances to produce the non-aqueous electrolyte secondary battery having excellent charge-discharge cycle performances.

### BACKGROUND ART

In recent years, a non-aqueous electrolyte secondary battery, which comprises a non-aqueous electrolyte prepared by dissolving lithium salt in a non-aqueous solvent and utilizes oxidization and reduction of lithium for charge-discharge performances, has been widely used as a new type of secondary battery of light weight and high electromotive force.

In this type of non-aqueous electrolyte secondary battery, the positive electrode active material used for the positive electrode is lithium transition metal composite oxide such as lithium cobalt composite oxide, lithium nickel composite oxide and lithium manganese composite oxide. As the negative electrode active material used for the negative electrode, carbon material, such as, coke, artificial graphite and natural graphite, are used alone or in combination. The non-aqueous electrolyte is generally prepared by dissolving lithium salt, such as, LiPF₆ and LiBF₄, in the non-aqueous solvent, such as, propylene carbonate and dimethyl carbonate.

However, such a non-aqueous electrolyte secondary battery has a problem that the non-aqueous solvent in the non-aqueous electrolyte is reacted and decomposed on the surface of the negative electrode using carbon material, so that preservation characteristics and charge-discharge cycle performances of the non-aqueous electrolyte secondary battery are degraded.

It has been conventionally known that, in a case where ethylene carbonate is used as the non-aqueous solvent in the non-aqueous electrolyte, the above-mentioned decomposition is kept at a low level and decomposed products produced by one part thereof forms a relatively excellent protective film on the surface of the negative electrode. Therefore, ethylene carbonate has been mainly used as the non-aqueous solvent in the non-aqueous electrolyte.

However, a problem of main use of ethylene carbonate as the non-aqueous solvent has been that repeated charge-discharge performances gradually cause reaction and decomposition of the non-aqueous solvent, which results in degradation of preservation characteristics and charge-discharge cycle performances of the non-aqueous electrolyte secondary battery.

In recent years, in order to solve such a problem, it has been proposed to add a small amount of protective film forming agents, for example, vinylene carbonate and the like, to the non-aqueous electrolyte to form an excellent protective film on the surface of the negative electrode using carbon material at a first stage of charge-discharge performances so that preservation characteristics and charge-discharge cycle performances of the non-aqueous electrolyte secondary battery are improved (For example, see Patent documents 1 to 3).

On the other hand, in recent years, in order to improve charge-discharge capacity per unit mass and per unit volume of the non-aqueous electrolyte secondary battery, it has been proposed that a metal, for example, tin, silicon and the like or its oxide, which is capable of absorbing or releasing lithium, is used instead of the above mentioned carbon material as the negative electrode active material for the negative electrode (For example, see non-patent document 1).

As a negative electrode using such a negative electrode active material, the negative electrode wherein a thin film of negative electrode active material, such as silicon thin film, tin thin film and the like, is formed on a current collector by CVD method, spattering method, vapor deposition method, thermal spraying method and plating method has been disclosed. It has also been shown that a great charge-discharge capacity and excellent charge-discharge cycle performances can be achieved by the use of such a negative electrode. The reason is believed as follows. The negative electrode mentioned above has a structure that the thin film of negative electrode active material is separated into columnar shape by slits formed in a thickness direction and a bottom of the column adheres to the current collector. In such a structure, a gap formed around the column makes it possible to reduce stress due to expansion and constriction of the thin film of negative electrode active material generated by the charge-discharge cycle and to prevent generation of stress peeling the thin film of negative electrode active material from the current collector. As a result, an excellent charge-discharge cycle performances can be obtained (e.g. see patent documents 4 and 5).

Nevertheless, a problem in using a metal, such as tin, silicon and the like, and an alloy containing such metal elements, and its oxide as the negative electrode active material has been that a reactivity to lithium salt and the non-aqueous solvent in the non-aqueous electrolyte is extremely high compared with the case of using carbon material, and the negative electrode active material is degraded and expanded. Further, as the effect thereof, there has also been a problem that charge-discharge cycle performances of the non-aqueous electrolyte secondary battery are degraded.
[Patent document 1] Japanese Unexamined Patent Publication No.H6-52887
[Patent document 2] Japanese Unexamined Patent Publication No.H8-45545
[Patent document 3] Japanese Patent No.3059832
[Non-patent document 1] Solid State Ionics.113-115.57 (1998)
[Patent document 4] Japanese Unexamined Patent Publication No.2002-83594
[Patent document 5] Japanese Unexamined Patent Publication No.2002-279972

### DISCLOSURE OF THE INVENTION

### PROBLEMS TO BE SOLVED

The present invention is made to solve the above-mentioned various problems of a non-aqueous electrolyte secondary battery comprising a negative electrode containing a thin film of negative electrode active material including a metal capable of absorbing or releasing lithium formed on a current collector; a positive electrode containing a positive electrode active material capable of absorbing or releasing lithium; and a non-aqueous electrolyte prepared by dissolving lithium salt in a non-aqueous solvent; wherein the thin film of negative electrode active material is separated into columnar shape by slits formed in a thickness direction.
Also, the objectives of the present invention are to restrict degradation and expansion of the negative electrode active material caused by reaction of the negative electrode active material and the non-aqueous electrolyte and to attain excellent charge-discharge cycle performances.

### SOLUTION TO THE PROBLEMS

In order to solve the above-mentioned problems, according to a non-aqueous electrolyte secondary battery of the present invention, which is the non-aqueous electrolyte secondary battery comprising a negative electrode containing a thin film of negative electrode active material including a metal capable of absorbing or releasing lithium formed on a current collector; a positive electrode containing a positive electrode active material capable of absorbing or releasing lithium; and a non-aqueous electrolyte prepared by dissolving lithium salt in a non-aqueous solvent; wherein the thin film of negative electrode active material is separated into columnar shape by slits formed in a thickness direction, a compound expressed by a general formula (I) below is contained in the non-aqueous electrolyte.

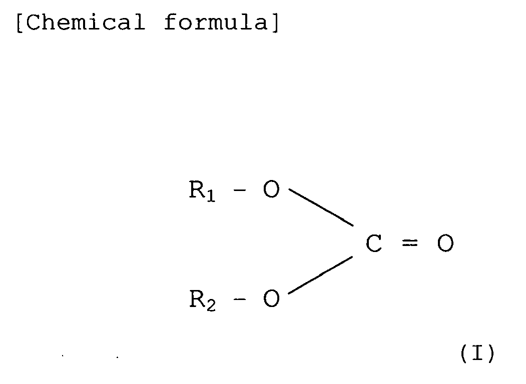

(In the formula, R₁ and R₂ are alkyl group containing non-substituents or various types of substituents. One or more fluorine is combined with either of R₁ or R₂ at least. R₁ and R₂ may be the same group or different from each other. Further, R₁ and R₂ may either be independent group or combined with each other wound in a ring.)

### EFFECT OF THE INVENTION

As in the present invention, in a case where a negative electrode containing a thin film of negative electrode active material including a metal capable of absorbing or releasing lithium formed on a current collector wherein the thin film of negative electrode activematerial is separated into columnar shape by slits formed in the thickness direction is used, a non-aqueous electrolyte secondary battery having a great charge-discharge capacity as mentioned above can be obtained.

As in the non-aqueous electrolyte secondary battery of the present invention, in a case where a non-aqueous electrolyte contains the compound expressed by the general formula (I) above, although the reason is not clear, it is believed that the effects as follows are obtained. A suitable thin film is formed on the surface of the negative electrode active material separated into columnar shape, degradation and expansion of the negative electrode active material caused by reaction of the negative electrode active material and the non-aqueous electrolyte are restricted, and charge-discharge cycle performances in the non-aqueous electrolyte secondary battery are greatly improved.

### BEST MODES FOR CARRYING OUT THE INVENTION

A non-aqueous electrolyte secondary battery and a non-aqueous electrolyte according to modes of the invention will be described in detail as follows. It is to be noted that the non-aqueous electrolyte secondary battery and the non-aqueous electrolyte of the invention is not limited by those illustrated in the following modes and may be practiced in modifications thereof as required so long as such modifications do not deviate from the scope of the invention.

First, a negative electrode employed for the non-aqueous electrolyte secondary battery of the present invention will be described in detail.

The negative electrode employed for the non-aqueous electrolyte secondary battery of the present invention comprises a thin film of negative electrode active material including a metal capable of absorbing or releasing lithium formed on a current collector, and the thin film of negative electrode active material is separated into columnar shape by slits formed in the thickness direction.

As the metal capable of absorbing or releasing lithium, a metal having a high ability of absorbing or releasing lithium and ensuring a high volume theoretical capacity is preferably used. Examples of usable metals include silicon, germanium, tin, lead, zinc, magnesium, sodium, aluminum, potassium, indium and so on. Preferably, silicon, germanium, tin or aluminum, more preferably, silicon or tin is used.

On the other hand, materials to be used for the current collector are not particularly limited if they have excellent adhesion to the thin film of negative electrode active material and comprise materials which do not alloy with lithium. Examples of usable materials include copper, nickel, stainless steel, molybdenum, tungsten, tantalum and so on. In view of easiness of getting, copper or nickel is preferably used, and copper is more preferably used.

If the current collector has an excessive thickness, a capacity of a battery is decreased due to increase of the capacity of the current collector occupied therein. Therefore, it is preferable that the thickness of the current collector be 30 µm or less, and more preferably be 20 µm or less. On the other hand, if the thickness of the current collector is too small, intensity as an electrode is insufficient. Therefore, it is preferable that the thickness of the current collector be not less than 1µm, and more preferably be not less than 5 µm.

The thin film of negative electrode active material on the current collector is formed as follows. The negative electrode active material is deposited on the current collector by CVD method, spattering method, vapor deposition method, thermal spraying method, plating method and the like.

The thin film of negative electrode active material on the current collector is separated into columnar shape by the slits formed in the thickness direction as follows. For example, a current collector having unevenness surface is used and a thin film of negative electrode active material is formed thereon, then, the thin film of negative electrode active material is changed for its thickness along the unevenness of the current collector, and slits are formed on parts where the thickness becomes small. Thus, the thin film of negative electrode active material is separated into columnar shape. Further, in addition to formation of slits from the beginning, it may be possible to separate the thin film of negative electrode active material into columnar shape by the slits formed by charge-discharge performances.

Further, in the present invention, it may be possible to form a thin film of negative electrode active material on a current collector by solidifying negative electrode active material powder like silicon powder with a binder and to separate the thin filmof negative electrode activematerial into columnar shape by slits formed in the thickness direction. For example, a slurry of negative electrode composites containing the negative electrode active material powder like silicon powder and the binder is prepared, applied to the current collector having unevenness surface and sintered, thereby forming a negative electrode containing a thin film of negative electrode active material having a film thickness of 20 µm or less. Then, the negative electrode thus fabricated is subjected to charge-discharge performances, so that the slits on the thin film of negative electrode active material is formed and the thin film of negative electrode active material is separated into columnar shape.

As the current collector forming the unevenness shape on its surface, for example, a foil having roughen surface may be used. An example of such a foil is an electrolytic foil which may be obtained in the following manner. A drum made of a metal is soaked into an electrolyte having ion dissolved and is rotated allowing current to flow until the metal is deposited on the surface of the drum, and the deposited metal is peeled. Thus, the electrolytic foil may be obtained. Further, the surface of the electrolytic foil may be treated by surface roughening treatment and the like. In addition to such an electrolytic foil, a rolled foil having a surface on which a metal is deposited by electrolysis method and is roughened, may be used.

In the current collector, it is preferable that surface roughness Ra be within a range of 0.01 µm to 1 µm, and more preferably be within a range of 0.1 µm to 0.5 µm. The surface roughness Ra is specified by the Japanese Industrial Standards (JISB 0601-1994) and can be measured with a surface roughness tester.

It is preferable that the components of the current collector are stably diffused in the thin film of negative electrode active material separated into columnar shape by slits, in order to maintain a condition that the thin film of negative electrode active material is adhered on the current collector in columnar shape stably.

In a case where silicon is used for the thin film of the negative electrode active material, in view of its physical properties, it is preferable that the components of the current collector diffused in the thin film of negative electrode active material form a solid solution and do not form an inter-metal compound with silicon. Therefore, it is preferable that the thin film using silicon is a film of amorphous material or microcrystal.

In a case where tin is used for the thin film of negative electrode active material, it is preferable that a mixed layer of the components of the current collector and tin components of the negative electrode active material is formed between the current collector and the thin film of negative electrode active material. The mixed layer may be of the inter-metal compound of the components of the current collector and the tin components of the negative electrode active material or be a solid solution. Such a mixed layer is formed by heat-treatment. Requirements for heat-treatment depend on a type of the current collector. For example, in a case where a current collector composed of copper is used, vacuum heat-treatment is carried out at a temperature which is preferably in a range of 100 °C to 240 °C and more preferably in a range of 160°C to 220 °C.

In formation of the thin film of negative electrode active material on the current collector as mentioned above, materials previously absorbing lithium may be used. Further, lithium may be added in forming the thin film of negative electrode active material. Still further, after the thin film of negative electrode active material is formed, lithium may be absorbed or added to the thin film of negative electrode active material.

In the non-aqueous electrolyte secondary battery according to the present invention, any commonly-used known materials may be used as the positive electrode active material capable of absorbing or releasing lithium used for its positive electrode. For example, lithium transition metal composite oxide, such as lithium cobalt composite oxide, lithium nickel composite oxide, lithium manganese composite oxide, lithium vanadium composite oxide, lithium iron composite oxide, lithium chromium composite oxide, lithium titanium composite oxide and the like may be used alone or in combination of two or more.

In addition, conventionally known methods may be used for fabrication of the positive electrode. Examples of such methods are as follows. A binding agent, a thickener, a conductive material, a solvent and the like are appropriately added to the positive electrode active material to give a slurry. The resultant slurry is applied to the current collector and dried. Thus, the positive electrode is fabricated. Further, a sheet-like positive electrode may be obtained by roll forming the positive electrode active material, and a pellet type positive electrode may be obtained by compression-molding the positive electrode active material. Still further, it may be possible to fabricate a positive electrode by depositing the positive electrode active material in thin film shape on a current collector by CVD method, spattering method, vapor deposition method, thermal spraying method and like.

In using the binding agent for fabrication of the positive electrode as mentioned above, materials used for the binding agent are not particularly limited if they are stable to the solvent used for fabrication of the positive electrode, the non-aqueous electrolyte and the other materials used for the non-aqueous electrolyte secondary battery. Examples of usable materials include polyvinylidene fluoride, polytetrafluoroethylene, styrene-butadiene rubber, isoprene rubber, butadiene rubber and the like.

In using the thickener for fabrication of the positive electrode, materials used for the thickener are not particularly limited if they are stable to the solvent used for fabrication of the positive electrode, the non-aqueous electrolyte and the other materials used for the non-aqueous electrolyte secondary battery. Examples of usable materials include carboxymethyl cellulose, methylcellulose, hydroxymethyl cellulose, ethyl cellulose, polyvinyl alcohol, starch oxide, phosphorylated starch, casein and the like.

In using the conductive material for fabrication of the positive electrode, materials used for the conductive material are not particularly limited if they are stable to the solvent used for fabrication of the positive electrode, the non-aqueous electrolyte and the other materials used for the non-aqueous electrolyte secondary battery. Examples of usable materials include metal materials, such as copper and nickel, and carbon material, such as graphite and carbon black.

In using the current collector for fabrication of the positive electrode, as materials used for the current collector, metals, such as aluminum, titanium and tantalum may be used. Particularly, aluminum foil is preferably used as the current collector because aluminum foil is easy to be processed to a thin film and is low cost.

As the non-aqueous electrolyte used for the non-aqueous electrolyte secondary battery according to the present invention, the non-aqueous electrolyte dissolving lithium salt in the non-aqueous solvent and containing the compound expressed by the general formula (I) above is used.

In the general formula (I), R₁ and R₂ are alkyl group containing non-substituents or various types of substituents. One or more fluorine is combined with either of R₁ or R₂ at least. R₁ and R₂ may be the same group or different from each other. Further, R₁ and R₂ may either be independent group or combined with each other wound in a ring.

In a case where each of R₁ and R₂ is independent group, an example of base alkyl group is chained alkyl group.

If a number of carbon forming chain alkyl group is too many, there is a risk of degradation of oxidation resistant property and inhibition of dissolution to the non-aqueous electrolyte, therefore, it is preferable to use saturated or unsaturated chained alkyl group having the number of carbon of within the range of 1 to 4. Examples of usable saturated chained alkyl group include methyl, ethyl, n-propyl, i-propyl, n-butyl, i-butyl, s-butyl and t-butyl. Examples of usable unsaturated chained alkyl group include vinyl, 1-propenyl, allyl, i-propenyl, 1-butenyl, 2-butenyl, 3-butenyl, 1-methyl-1-propenyl, 2-methyl-1-propenyl, 1-ethylvinyl, 1-methylallyl, 2-methylallyl, 1,2-propadienyl, 1,2-butadienyl, 1,3-butadienyl, 2,3-butadienyl, 1-vinylvinyl, ethynyl, 1-propenyl, 2-propenyl, 1-butynyl, 2-butynyl, 3-butynyl, and 2-penten-4-ynyl. More preferably, saturated or unsaturated chained alkyl group having the number of carbon of within the range of 1 to 3, such as, methyl group, ethyl group, n-propyl group, i-propyl group, vinyl group and allyl group, is used.

In the case where each of R₁ and R₂ is independent group, alkyl group wherein one part of hydrogen is substituented by substituents which are not fluorine may be used. Examples of usable substituents include halide group, such as chlorine, bromine, and iodine, alkoxy group, carbonic acid ester group, carboxylic acid ester group and amino group. However, in view of oxidation resistant property, reducing property, dissolution property and preservation stability, it is preferable to use alkyl group having no substituents which are not fluorine.

In the case where each of R₁ and R₂ is independent group, favorable examples of usable group include methyl, fluoromethyl, trifluoromethyl, ethyl, 1-fluoroethyl, 2-fluoromethyl, 2,2-difluoromethyl, 2,2,2-trifluoroethyl, n-propyl, 1-fluoro-n-propyl, 2-fluoro-n-propyl, 3-fluoro-n-propyl, 3,3,3-trifluoro-n-propyl, i-propyl, and 1-fluoro-i-propyl. In view of dissolution property and stability, it is preferable to use methyl group, methyl group substituted by one or more fluorine, ethyl group, ethyl group substituted by one or more fluorine, n-propyl group and n-propyl group substituted by one or more fluorine. Further, in view of productiveness, it is preferable to use methyl group, fluoromethyl group, ethyl group, 1-fluoroethylgroup, 2-fluoroethylgroup, 2,2,2-trifluoroethyl group, n-propyl group, and 3-fluoro-n-propyl group.

Examples of the compound expressed by the general formula (I) above wherein each of R₁ and R₂ is independent group include fluoromethyl methyl carbonate, 1-fluoroethylmethyl carbonate, 2-fluoroethyl methyl carbonate, 1-fluoro-n-propyl methyl carbonate, 3-fluoro-n-propyl methyl carbonate, ethyl fluoromethyl carbonate, ethyl-1-fluoroethyl carbonate, ethyl-2-fluoroethyl carbonate, ethyl-1-fluoro-n-propyl methyl carbonate, ethyl-3-fluoro-n-propyl methyl carbonate, bis(fluoromethyl)carbonate, bis(2-fluoroethyl)carbonate, 2-fluoroethyl fluoromethyl carbonate, bis(3-fluoro-n-propyl)carbonate, 2-fluoroethyl-3-fluoro-n-fluoropropyl carbonate, (2,2-difluoroethyl)methyl carbonate, ethyl (2,2-difluoroethyl) carbonate, (2,2,2-trifluoroethyl)methyl carbonate, and ethyl(2,2,2-trifluoroethyl) carbonate.

In a case where R₁ and R₂ are combined with each other wound in a ring, it is preferable that the wounded ring structure is stable and not opened easily. As a group constituted by combination of R₁ and R₂, the group wherein the total number of carbon including carbon in substituents is within the range of 2 to 6, is preferably used. Further, it is preferable that the number of carbon of the part which constitutes the ring be 2 or 3.

As a suitable compound having the wound ring structure constituted by combination of R₁ and R₂ as mentioned above, it is preferable to use compounds having a frame of saturated cyclic carbonate, such as, ethylene carbonate, trimethylene carbonate, propylene carbonate, 4-ethyl-1,3-dioxolane-2-one, 4,4-dimethyl-1,3-dioxolane-2-one, 4,5-dimethyl-1,3-dioxolane-2-one, 4-methyl-1,3-dioxane-2-one, 5-methyl-1,3-dioxane-2-one, 4-n-propyl-1,3-dioxolane-2-one, 4-i-propyl-1,3-dioxolane-2-one, 4-ethyl-4-methyl-1,3-dioxolane-2-one, 4-ethyl-5-methyl-1,3-dioxolane-2-one, 4-ethyl-1,3-dioxane-2-one, 5-ethyl-2,3-dioxane-2-one, 4,4-dimethyl-2,3-dioxane-2-one, 4,5-dimethyl-2,3-dioxane-2-one, 4,6-dimethyl-2,3-dioxane-2-one, 5,5-dimethyl-2,3-dioxane-2-one, 4-n-butyl-1,3-dioxolane-2-one, 4-i-butyl-1,3-dioxolane-2-one, 4-s-butyl-1,3-dioxolane-2-one, 4-t-butyl-1,3-dioxolane-2-one, 4-n-propyl-4-methyl-1,3-dioxolane-2-one, 4-n-propyl-5-methyl-1,3-dioxolane-2-one, 4-i-propyl-4-methyl-1,3-dioxolane-2-one, 4-i-propyl-5-methyl-1,3-dioxolane-2-one, 4,4-diethyl-1,3-dioxolane-2-one, 4,5-diethyl-1,3-dioxolane-2-one, 4-n-propyl-1,3-dioxane-2-one, 4-i-propyl-1,3-dioxane-2-one, 5-n-propyl-1,3-dioxane-2-one, 5-i-propyl-1,3-dioxane-2-one, 4-ethyl-4-methyl-1,3-dioxane-2-one, 4-ethyl-5-methyl-1,3-dioxane-2-one, 4-ethyl-6-methyl-1,3-dioxane-2-one, 5-ethyl-4-methyl-1,3-dioxane-2-one, 5-ethyl-5-methyl-1,3-dioxane-2-one, 4,4,5-trimethyl-1,3-dioxane-2-one, 4,4,6-trimethyl-1,3-dioxane-2-one, 4,5,5-trimethyl-1,3-dioxane-2-one and 4,5,6-trimethyl-1,3-dioxane-2-one. In addition, as a suitable compound having the wound ring structure constituted by combination of R₁ and R₂ as mentioned above, it is preferable to use compounds having a frame of unsaturated cyclic carbonate, such as, vinylene carbonate, methyl vinylene carbonate, dimethyl vinylene carbonate, ethyl vinylene carbonate, ethyl methyl vinylene carbonate, diethyl vinylene carbonate, n-propyl vinylene carbonate, i-propyl vinylene carbonate, n-butyl vinylene carbonate, i-butyl vinylene carbonate, s-butyl vinylene carbonate, t-butyl vinylene carbonate, n-propyl methyl vinylene carbonate, i-propyl methyl vinylene carbonate, 1,3-dioxine-2-one, 4-methyl-1,3-dioxine-2-one, 5-methyl-1,3-dioxine-2-one, 6-methyl-1,3-dioxine-2-one, 4-ethyl-1,3-dioxine-2-one, 5-ethyl-1,3-dioxine-2-one, 6-ethyl-1,3-dioxine-2-one, 4,5-dimethyl-1,3-dioxine-2-one, 5,6-dimethyl-1,3-dioxine-2-one, 6,6-dimethyl-1,3-dioxine-2-one, 4-n-propyl-dimethyl-1,3-dioxine-2-one, 5-n-propyl-dimethyl-1,3-dioxine-2-one, 6-n-propyl-dimethyl-1,3-dioxine-2-one, 4-i-propyl-dimethyl-1,3-dioxine-2-one, 5-i-propyl-dimethyl-1,3-dioxine-2-one, 6-i-propyl-dimethyl-1,3-dioxine-2-one, 4-ethyl-5-methyl-1,3-dioxine-2-one, 4-ethyl-6-methyl-1,3-dioxine-2-one, 5-ethyl-4-methyl-1,3-dioxine-2-one, 5-ethyl-6-methyl-1,3-dioxine-2-one, 6-ethyl-6-methyl-1,3-dioxine-2-one, vinyl ethylene carbonate, 4-methyl-4-vinyl-1,3-dioxolane-2-one, 4-methyl-5-vinyl-1,3-dioxolane-2-one, 4-ethyl-4-vinyl-1,3-dioxolane-2-one, 4-ethyl-5-vinyl-1,3-dioxolane-2-one, 4,4-divinyl-1,3-dioxolane-2-one, 4,5-divinyl-1,3-dioxolane-2-one, 4-vinyl-1,3-dioxane-2-one, 5-vinyl-1,3-dioxane-2-one, 4-methyl-4-vinyl-1,3-dioxane-2-one, 4-methyl-5-vinyl-1,3-dioxane-2-one, 4-methyl-6-vinyl-1,3-dioxane-2-one, 5-methyl-4-vinyl-1,3-dioxane-2-one, 5-methyl-5-vinyl-1,3-dioxane-2-one, 4,4-divinyl-1,3-dioxane-2-one, 4,5-divinyl-1,3-dioxane-2-one, 4,6-divinyl-1,3-dioxane-2-one and 5,5-divinyl-1,3-dioxane-2-one.
Particularly, it is preferable to use the compounds having a frame of ethylene carbonate, propylene carbonate, vinylene carbonate, methyl vinylene carbonate and vinyl ethylene carbonate.

In the case where R1 and R2 are combined with each other wound in the ring as described above, it may be possible that hydrogen in the combined R1 and R2 is substituted by substituents which are not fluorine. Examples of usable substituents include halide group, such as chlorine, bromine and iodine, alkoxy group, carbonic acid ester group, carboxylic acid ester group and amino group. However, in view of oxidation resistant property, reducing property, dissolution property and preservation stability, it is preferable that substituents which are not fluorine are not contained.

In the case where R₁ and R₂ are combined with each other wound in the ring, examples of the compound expressed by the general formula (I) above include fluoroetylene carbonate, 4,4-difluoro-1,3-dioxolane-2-one, 4,5-difluoro-1,3-dioxolane-2-one, 4-fluoro-5-methyl-1,3-dioxolane-2-one, 4-(fluoromethyl)-1,3-dioxolane-2-one, 4-(trifluoromethyl)-1,3-dioxolane-2-one, 4-fluoro-5-(fluoromethyl)-1,3-dioxolane-2-one, 4-fluoro-5-(trifluoromethyl)-1,3-dioxolane-2-one, 4-fluoro-1,3-dioxole-2-one, 4,5-difluoro-1,3-dioxole-2-one, 4-fluoro-5-methyl-1,3-dioxole-2-one, 4-(fluoromethyl)-1,3-dioxole-2-one, 4-fluoro-5-(fluoromethyl)-1,3-dioxole-2-one, 4-(1-fluorovinyl)-1,3-dioxolane-2-one, 4-(2-fluorovinyl)-1,3-dioxolane-2-one, and 4-fluoro-5-vinyl-1,3-dioxolane-2-one. Particularly, in view of dissolution property, stability and productiveness, it is preferable to use fluoroetylene carbonate, 4,4-difluoro-1,3-dioxolane-2-one, 4,5-difluoro-1,3-dioxolane-2-one, 4-(fluoromethyl)-1,3-dioxolane-2-one, 4-(trifluoromethyl)-1,3-dioxolane-2-one, and 4-fluoro-1,3-dioxole-2-one.

In order that the compound expressed by the general formula (I) above is properly dissolved in the non-aqueous electrolyte, it is preferable to use the compound having a molecular weight of 300 or less, and more preferably, 200 or less.

If the amount of the compound expressed by the general formula (I) above contained in the non-aqueous electrolyte is small, sufficient effect by the compound expressed by the general formula (I) above can not be obtained. Therefore, the amount of the compound contained in the non-aqueous electrolyte is usually to be not less than 0.01 mass % with respect to a mass of the non-aqueous electrolyte excluding lithium salt, preferably be not less than 0.1 mass %, and more preferably be not less than 0.5 mass %.

On the other hand, in the case where the compound expressed by the general formula (I) wherein each of R₁ and R₂ is independent group is used, the compound is generally combined with cyclic carbonate or other high permittivity solvent, therefore, the amount of the compound contained in the non-aqueous electrolyte is to be 90 mass % or less with respect to the mass of the non-aqueous electrolyte excluding lithium salt, preferably be 70 mass % or less.

In the case where the compound expressed by the general formula (I) wherein R₁ and R₂ are combined with each other wound in the ring is used, the compound is generally combined with chained carbonate or other low viscosity solvent, therefore, the amount of the compound contained in the non-aqueous electrolyte is to be 20 mass % or less with respect to the mass of the non-aqueous electrolyte excluding lithium salt, preferably be 10 mass % or less.

Examples of the compound expressed by the general formula (I) wherein one carbonate of R₁ and R₂ is combined with two or more fluorine include chained carbonate, such as, (2,2-difluoroethyl) methyl carbonate, ethyl (2,2-difluoroethyl) carbonate, (2,2,2-trifluoroetyl) methyl carbonate and ethyl (2,2,2-trifluoroetyl) carbonate, and cyclic carbonate, such as, 4,4-difluoro-1,3-dioxolane-2-one.
In a case where the compound expressed by the general formula (I) wherein double bond is contained in R₁ and R₂, for example, 4-fluoro-1,3-dioxole-2-one and 4-fluoro-5-vinyl-1,3-dioxolane-2-one is used, because of its high reaction activity, if the additive amount is too large, a lot of decomposition occurs in the ordinary working of battery, and the battery performance is badly affected. Therefore, it is preferable that the additive amount of the compounds to the non-aqueous electrolyte be 20 mass % or less, more preferably be 10 mass % or less, and further more preferably be 5 mass % or less.

Further, in the present invention, examples of favorable non-aqueous solvent for the non-aqueous electrolyte include cyclic carbonate, chained carbonate, lactone compound (cyclic carboxylic acid ester), chained carboxylic acid ester, cyclic ether and chained ether, wherein each total number of carbon is in the range of 3 to 9. It may be possible that the aforesaid non-aqueous solvent be used alone or in combination of two or more.

If the total amount of the compound expressed by the general formula (I) above, and the non-aqueous solvent wherein each total number of carbon is in the range of 3 to 9, such as, cyclic carbonate, chained carbonate, lactone compound (cyclic carboxylic acid ester), chained carboxylic acid ester, cyclic ether and chained ether, is not less than 90 mass % with respect to the mass of the non-aqueous electrolyte excluding lithium salt, lithium ion conductivity and stability in the non-aqueous electrolyte are enhanced and battery characteristics are improved in the non-aqueous electrolyte secondary battery.

An example of favorable non-aqueous solvent is the non-aqueous solvent containing at least one type selected from the aforesaid chained carbonate wherein the total number of carbon is in the range of 3 to 9 and the compound expressed by the general formula (I) wherein each of R1 and R2 is independent group, and one or more solvent selected from a group of cyclic carbonate and lactone compound wherein the total number of carbon is in the range of 3 to 9. Particularly, it is preferable that one or more solvent selected from the group of cyclic carbonate and lactone compound is contained in a ratio of not less than 20 mass %. In such a non-aqueous solvent, high permittivity solvent, cyclic carbonate and lactone compound wherein the total number of carbon is in the range of 3 to 9, is combined with low permittivity solvent, chained carbonate wherein the total number of carbon is in the range of 3 to 9 and the compound expressed by the general formula (I) wherein each of R1 and R2 is independent group, and as a result, lithium ion conductivity and stability are improved and a non-aqueous electrolyte secondary battery having better-balanced battery characteristics may be obtained.

Examples of usable cyclic carbonate wherein the total number of carbon is in the range of 3 to 9 include ethylene carbonate, propylene carbonate, butylene carbonate, vinylene carbonate and vinyl ethylene carbonate. Particularly, it is preferable to use ethylene carbonate and propylene carbonate.

Examples of usable chained carbonate wherein the total number of carbon is in the range of 3 to 9 include dimethyl carbonate; diethyl carbonate, di-n-propyl carbonate, di-isopropyl carbonate, n-propyl isopropyl carbonate, di-n-butyl carbonate, di-i-propyl carbonate, di-t-butyl carbonate, n-butyl-i-butyl carbonate, n-butyl-t-butyl carbonate, i-butyl-t-butyl carbonate, ethyl methyl carbonate, methyl-n-propyl cabonate, n-butyl methyl carbonate, i-butyl methyl carbonate, t-butyl methyl carbonate, ethyl-n-propyl carbonate, n-butyl ethyl carbonate, i-butyl ethyl carbonate, t-butyl ethyl carbonate, n-butyl-n-propyl carbonate, i-butyl-n-propyl carbonate, t-butyl-n-propyl carbonate, n-butyl-i-propyl carbonate, i-butyl-i-propyl carbonate, and t-butyl-i-propyl carbonate. Particularly, it is preferable to use dimethyl carbonate, diethyl carbonate and ethyl methyl carbonate.

Examples of usable lactone compound wherein the total number of carbon is in the range of 3 to 9 include γ -butyrolactone, γ-valerolactone, and δ-valerolactone may be used. Particularly, it is preferable to use γ-butyrolactone.

Examples of chained carboxylic acid ester wherein the total number of carbon is in the range of 3 to 9 include methyl acetate, ethyl acetate, n-propyl-acetate, i-propyl-acetate, n-butyl-acetate, i-butyl-acetate, t-butyl-acetate, methyl propionate, ethyl propionate, n-propyl-propionate, i-propyl-propionate, n-butyl-propionate, i-butyl-propionate, and t-butyl-propionate. Particularly, it is preferable to use ethyl acetate, methyl propionate, and ethyl propionate.

Examples of usable chained ether wherein the total number of carbon is in the range of 3 to 9 include dimethoxymethane, dimethoxyethane, diethoxymethane, diethoxyethane, ethoxymethoxymethane and ethoxymethoxyethane. Particularly, it is preferable to use dimethoxyethane and diethoxyethane.

As lithium salt used for the non-aqueous electrolyte, inorganic lithium salt or organic lithium salt generally used for a non-aqueous electrolyte may be used.

Examples of usable inorganic lithium salt include inorganic fluoride salt, such as LiPF₆, LiAsF₆ and LiAlF₄, and perhalogenide, such as LiClO₄, LiBrO₄ and LiIO₄. Examples of usable organic lithium salt include the following: organic sulfonic acid, such as LiCF₃SO₃; perfluoroalkylsulfonate imide salt, such as LiN(CF₃SO₂)₂, LiN(C₂F₅SO₂) ₂ and LiN(CF₃SO₂) (C₄F₉SO₂) ; perfluoroalkylsulfonate methide salt, such as LiC(CF₃SO₂)₃; and organic lithium salt containing fluorine, which is prepared by substituting one part of fluorine atom in inorganic fluoride salt by perfluoroalkyl group, for example, LiPF₃(CF₃)₃, LiPF₂(C₂F₅)₄, LiPF₃(C₂F₅)₃, LiB(CF₃)₄, LiBF(CF₃)₃, LiBF₂(CF₃)₂, LiBF₃(CF₃), LiB(C₂F₅)₄, LiBF(C₂F₅)₃, LiBF₂ (C₂F₅)₂ and LiBF₃(C₂F₅). Such a type of lithium salt may be used alone or in combination of two or more. As such a lithium salt, it is preferable to use LiPF₆, LiN (CF₃SO₂)₂, LiN (C₂F₅SO₂)₂, LiN (CF₃SO₂) (C₄F₉SO₂), LiPF₃ (CF₃)₃, LiPF₃(C₂F₅)₃ and LiBF₂(C₂F₅)₂.

Particularly, the use of LiBF₄ and LiPF₆ as lithium salt makes it possible to obtain an excellent non-aqueous electrolyte having high electrochemical stability and high electrical conductivity in a large temperature range. Further, in order to sufficiently obtain the above mentioned effects by the use of LiBF₄ and LiPF₆, it is desirable that LiBF₄ and LiPF₆ is contained in a ratio of not less than 5mol %, preferably not less than 30 mol %, with respect to total lithium salt in the non-aqueous electrolyte.

Further, if the concentration of lithium salt in the non-aqueous electrolyte is too low, electrical conductivity in the non-aqueous electrolyte is degraded. On the other hand, if the concentration is too high, viscosity is increased decreasing electrical conductivity, and there is a risk of deposit of lithium salt at a low temperature, which causes lowering of battery performances. Therefore, it is preferable that the concentration of lithium salt in the non-aqueous electrolyte is to be within a range of 0.5 to 3 mol/liter.

Further, various types of additive agents, for example, publicly known overcharge preventing agents, dehydrator and deoxidation agent, may be added to the non-aqueous electrolyte. However, if an amount of additive is too large, the battery performance is badly affected because of decomposition of the additive agents. Therefore, an appropriate setting of the additive amount is necessary.

It should be construed that form and structure of the non-aqueous electrolyte secondary battery according to the present invention are not particularly limited. Any type of non-aqueous electrolyte secondary batteries may be used. Examples include a cylindrical-shaped non-aqueous electrolyte secondary battery wherein a sheet-shaped positive electrode and a sheet-shaped negative electrode are spirally coiled with a separator, a cylindrical-shaped non-aqueous electrolyte secondary battery having inside-out structure wherein a separator is interposed between a pellet-shaped positive electrode and a pellet-shaped negative electrode, and a coin-shaped non-aqueous electrolyte secondary battery wherein a separator is interposed between a pellet-shaped positive electrode and a pellet-shaped negative electrode.

Further, generally known separator may be employed as the aforesaid separator. Particularly preferable is a separator having stability to the non-aqueous electrolyte and composed of materials having an excellent liquid retaining capability. Examples of the preferable separator include porous sheet and nonwoven fabric composed of polyolefin, such as polyethylene and polypropylene.

### [Examples]

Hereinbelow, examples will be specifically described of the non-aqueous electrolyte secondary battery according to the present invention, and it will be demonstrated by the comparison with comparative examples that the non-aqueous electrolyte secondary batteries in the examples are capable of improving charge-discharge cycle performances. It should be construed that the non-aqueous electrolyte secondary battery according to the present invention is not limited to those illustrated in the following examples, but various changes and modifications may be made unless such changes and variations depart from the scope of the invention as defined in the append claims.

### (Example 1)

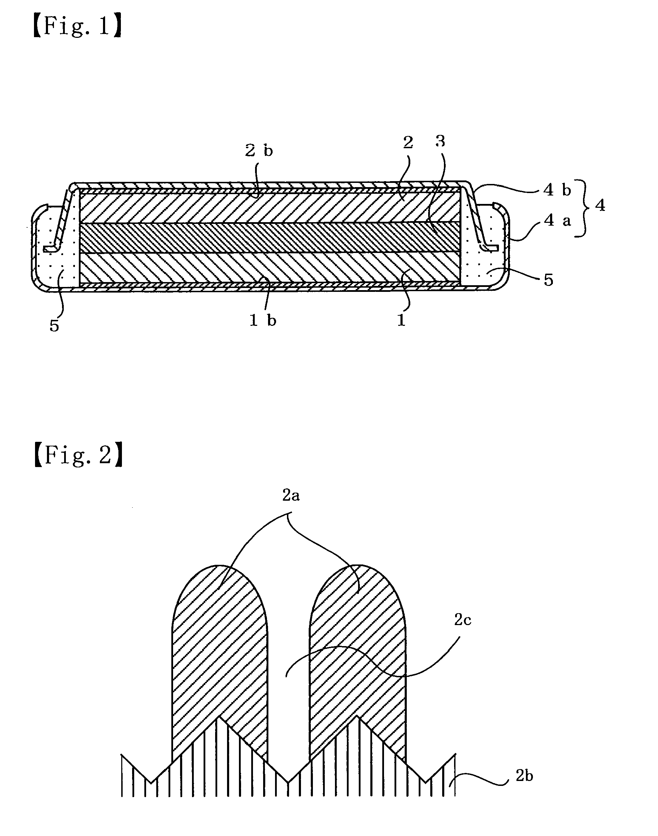

In Example 1, a flat coin-shaped non-aqueous electrolyte secondary battery illustrated in Fig.1 was fabricated by preparing a negative electrode and a positive electrode and adjusting a non-aqueous electrolyte in the following manner.

### Preparation of Negative Electrode

A negative electrode was prepared as follows. A thin film of negative electrode active material consisting of silicon thin film having a thickness of about 5 µm is formed on a negative electrode current collector consisting of an electrolyte copper foil (thickness=18 µm, surface roughness Ra=0.188µm) by an RF sputtering. The RF sputtering was carried out on the condition that a sputter gas flow Ar was 100 sccm, a substrate temperature was a room temperature (without heating), a reactive pressure was 0.133 Pa (1.0 x 10⁻³ Torr) and a high frequency electricity was 200 W.

According to a result of analysis of the silicon thin film by Raman spectroscopy, the peak value near 480 cm⁻¹ was detected, but the peak value near 520 cm⁻¹ was not detected. This result means the silicon thin film was an amorphous silicon thin film. According to a result of observation of the thin film of negative electrode active material consisting of amorphous silicon thin film formed on the negative electrode current collector by SEM (scanning transmission electron microscope), the thin film has structure shown in a typical figure of Fig. 2, the structure such that a thin film of negative electrode active material 2a was separated into columnar shape along unevenness of a negative electrode current collector 2b by slits 2c formed in the thickness direction.

The negative electrode current collector of electrolytic copper foil wherein the thin film of negative electrode active material consisting of amorphous silicon thin film was formed was vacuum dried at 100 °C for 2 hours and punched into a disk form having a diameter of 10.0 mm to give the negative electrode.

### Preparation of Positive Electrode

A positive electrode was prepared as follows. A powder of cobalt dioxide containing lithium LiCoO₂ (C5 commercially available from Nippon Chemical Industrial CO.,LTD.) was used as a positive electrode active material. Then, 85 parts by mass of that LiCoO₂ powder was mixed with 6 parts by mass of carbon black (Denka Black commercially available from DENKI KAGAKU KOGYO KABUSHIKI KAISHA) and 9 parts by mass of polyvinylidene fluoride (KF-1000 commercially available from KUREHA CHEMICAL INDUSTRY CO., LTD.), and N-methyl-2-pyrrolidone was added thereto in order to give a slurry. The slurry was uniformly applied to an aluminum foil having a thickness of 20 µm as the positive electrode current collector, in a ratio of about 90 percent of a theoretical capacity for the negative electrode, and was dried at 100 °C for 12 hours, and punched into a disk form having a diameter of 10.0 mm, so as to give the positive electrode.

### Preparation of Non-aqueous Electrolyte

A non-aqueous electrolyte was adjusted by dissolving lithium hexafluorophosphate, LiPF₆, as a solute at a proportion of 1 mol/liter in a mixed solvent wherein ethylene carbonate and diethyl carbonate, which is a non-aqueous solvent, were mixed at a volume ratio of 3:7. Further, 2 mass % of fluoro ethylene carbonate, which is the compound expressed by the general formula (I), was added to the non-aqueous electrolyte. In such a case, the mass ratio of fluoro ethylene carbonate to the non-aqueous electrolyte excluding lithium salt was 2.2 mass %.

### Preparation of Battery

A battery was fabricated as follows. As illustrated in Fig. 1, a separator 3 made of fine porous film of polypropylene wherein aforesaid non-aqueous electrolyte was impregnated was interposed between a positive electrode 1 and a negative electrode 2, which were prepared in the above-described manner, and these components were accommodated in a battery case 4 made of a positive electrode can 4a and a negative electrode can 4b which are made of stainless. The positive electrode 1 was connected to the positive electrode can 4a via a positive electrode current collector lb, while the negative electrode 2 was connected to the negative electrode can 4b via a negative electrode current collector 2b. Thereafter, an insulative packing 5 was placed between the positive electrode can 4a and the negative electrode can 4b, and the battery can 4 was sealed. The positive electrode can 4a and the negative electrode can 4b were electrically insulated and sealed with the insulative packing 5. Thus, a non-aqueous electrolyte secondary battery having a design capacity of 3.4 mAh was obtained.

### (Example 2)

In Example 2, a non-aqueous electrolyte secondary battery of Example 2 was fabricated in the same manner as Example 1 except that the type of non-aqueous electrolyte was changed from that of Example 1.

Example 2 took the same procedure as Example 1, except that 2 mass % of fluoromethyl methyl carbonate was added as the compound expressed by the general formula (I), in place of fluoro ethylene carbonate in Example 1, in preparation of the non-aqueous electrolyte.

### (Example 3)

In Example 3, a non-aqueous electrolyte secondary battery of Example 3 was fabricated in the same manner as Example 1 except that the type of non-aqueous electrolyte was changed from that of Example 1.

Example 3 took the same procedure as Example 1, except that 2 mass % of 2-fluoroethyl methyl carbonate was added as the compound expressed by the general formula (I), in place of fluoro ethylene carbonate in Example 1, in preparation of the non-aqueous electrolyte.

### (Example 4)

In Example 4, a non-aqueous electrolyte secondary battery of Example 4 was fabricated in the same manner as Example 1 except that the type of non-aqueous electrolyte was changed from that of Example 1.

Example 4 took the same procedure as Example 1, except that 2 mass % of ethyl-2-fluoroethyl carbonate was added as the compound expressed by the general formula (I), in place of fluoro ethylene carbonate in Example 1, in preparation of the non-aqueous electrolyte.

### (Example 5)

In Example 5, a non-aqueous electrolyte secondary battery of Example 5 was fabricated in the same manner as Example 1 except that the type of non-aqueous electrolyte was changed from that of Example 1.

Example 5 took the same procedure as Example 1, except that 2 mass % of bis (2-fluoroethyl) carbonate was added as the compound expressed by the general formula (I), in place of fluoro ethylene carbonate in Example 1, in preparation of the non-aqueous electrolyte.

### (Example 6)

In Example 6, a non-aqueous electrolyte secondary battery of Example 6 was fabricated in the same manner as Example 1 except that the type of non-aqueous electrolyte was changed from that of Example 1.

Example 6 took the same procedure as Example 1, except that 2 mass % of ethyl (2,2,2-trifluoroethyl) carbonate was added as the compound expressed by the general formula (I), in place of fluoro ethylene carbonate in Example 1, in preparation of the non-aqueous electrolyte.

### (Example 7)

In Example 7, a non-aqueous electrolyte secondary battery of Example 7 was fabricated in the same manner as Example 1 except that the type of non-aqueous electrolyte was changed from that of Example 1.

Example 7 took the same procedure as Example 1, except that 2 mass % of bis (2,2,2-trifluoroethyl) carbonate was added as the compound expressed by the general formula (I), in place of fluoro ethylene carbonate in Example 1, in preparation of the non-aqueous electrolyte.

### (Example 8)

In Example 8, a non-aqueous electrolyte secondary battery of Example 8 was fabricated in the same manner as Example 1 except that the type of non-aqueous electrolyte was changed from that of Example 1.

Example 8 took the same procedure as Example 1, except that 2 mass % of trifluoromethyl-1,3-dioxolane-2-one was added as the compound expressed by the general formula (I), in place of fluoro ethylene carbonate in Example 1, in preparation of the non-aqueous electrolyte.

### (Example 9)

In Example 9, a non-aqueous electrolyte secondary battery of Example 9 was fabricated in the same manner as Example 1 except that the type of non-aqueous electrolyte was changed from that of Example 1.

In Example 9, 2 mass % of vinylene carbonate having no fluorine combined was added, in addition to 2 mass % of fluoro ethylene carbonate in Example 1, in preparation of the non-aqueous electrolyte.

### (Example 10)

In Example 10, a non-aqueous electrolyte secondary battery of Example 10 was fabricated in the same manner as Example 1 except that the type of non-aqueous electrolyte was changed from that of Example 1.

In Example 10, a non-aqueous electrolyte was prepared by dissolving lithium hexafluorophosphate, LiPF₆, as a solute at a proportion of 1 mol/liter to a mixed solvent wherein ethylene carbonate which is a non-aqueous solvent and fluoromethyl methyl carbonate which is the compound expressed by the general formula (I) above were mixed at a volume ratio of 3:7. In such a case, the mass ratio of fluoromethyl methyl carbonate to the non-aqueous electrolyte excluding lithium salt was 68.8 mass %.

### (Example 11)

In Example 11, a non-aqueous electrolyte secondary battery of Example 11 was fabricated in the same manner as Example 1 except that the type of non-aqueous electrolyte was changed from that of Example 1.

In Example 11, a non-aqueous electrolyte was prepared by dissolving lithium hexafluorophosphate LiPF₆ as a solute at a proportion of 1mol/liter in a mixed solvent wherein ethylene carbonate of non-aqueous solvent and 2-fluoroethyl methyl carbonate which is the compound expressed by the general formula (I) above were mixed at a volume ratio of 3:7. In such a case, the mass ratio of 2-fluoroethyl methyl carbonate to the non-aqueous electrolyte excluding lithium salt was 67.9 mass %.

### (Example 12)

In Example 12, a non-aqueous electrolyte secondary battery of Example 12 was fabricated in the same manner as Example 1 except that the type of non-aqueous electrolyte was changed from that of Example 1.

In Example 12, a non-aqueous electrolyte was prepared by dissolving lithium hexafluorophosphate LiPF₆ as a solute at a proportion of 1 mol/liter in a mixed solvent wherein ethylene carbonate of non-aqueous solvent and ethyl-2-fluoroethyl carbonate which is the compound expressed by the general formula (I) above were mixed at a volume ratio of 3:7. In such a case, the mass ratio of ethyl-2-fluoroethyl carbonate to the non-aqueous electrolyte excluding lithium salt was 66.6 mass %.

### (Example 13)

In Example 13, a non-aqueous electrolyte secondary battery of Example 13 was fabricated in the same manner as Example 1 except that the type of non-aqueous electrolyte was changed from that of Example 1.

In Example 13, a non-aqueous electrolyte was prepared by dissolving lithium hexafluorophosphate LiPF₆ as a solute at a proportion of 1 mol/liter to a mixed solvent wherein ethylene carbonate and diethyl carbonate of non-aqueous solvent were mixed with ethyl-2-fluoroethyl carbonate which is the compound expressed by the general formula (I) above. The mixed volume ratio of the mixed solvent was 3:3.5:3.5. In such a case, the mass ratio of ethyl-2-fluoroethyl carbonate to the non-aqueous electrolyte excluding lithium salt was 34.9 mass %.

### (Example 14)

In Example 14, a non-aqueous electrolyte secondary battery of Example 14 was fabricated in the same manner as Example 1 except that the type of non-aqueous electrolyte was changed from that of Example 1.

In Example 14, a non-aqueous electrolyte was prepared by dissolving lithium hexafluorophosphate LiPF₆ as a solute at a proportion of 1 mol/liter to a mixed solvent wherein ethylene carbonate of non-aqueous solvent and 2-fluoroethyl methyl carbonate which is the compound expressed by the general formula (I) above were mixed at a volume ratio of 3: 7. Further, 2 mass % of fluoro ethylene carbonate which is the compound expressed by the general formula (I) above was added to the non-aqueous electrolyte. In such a case, the mass ratio of 2-fluoroethyl methyl carbonate to the non-aqueous electrolyte excluding lithium salt was 66.5 mass % and that of fluoro ethylene carbonate was 2.2 mass %. As a result, the mass ratio of the compound expressed by the general formula (I) to the non-aqueous electrolyte excluding lithium salt was 68.7 mass % in total.

### (Example 15)

In Example 15, a non-aqueous electrolyte secondary battery of Example 15 was fabricated in the same manner as Example 1 except that the type of non-aqueous electrolyte was changed from that of Example 1.

In Example 15, a non-aqueous electrolyte was prepared by dissolving lithium hexafluorophosphate LiPF₆ as a solute at a proportion of 1 mol/liter in a mixed solvent wherein ethylene carbonate of non-aqueous solvent and 2-fluoroethyl methyl carbonate which is the compound expressed by the general formula (I) above were mixed at a volume ratio of 3:7. Further, 2 mass % of vinylene carbonate having no fluorine combined was added to the non-aqueous electrolyte. In such a case, the mass ratio of 2-fluoroethyl methyl carbonate to the non-aqueous electrolyte excluding lithium salt was 66.5 mass % and that of vinylene carbonate was 2.2 mass %.

### (Comparative Example 1)

In Comparative Example 1, a non-aqueous electrolyte secondary battery of Comparative Example 1 was fabricated in the same manner as Example 1 except that the type of non-aqueous electrolyte was changed from that of Example 1.

In Comparative Example 1, a non-aqueous electrolyte was prepared by dissolving lithium hexafluorophosphate LiPF₆ as a solute at a proportion of 1 mol/liter in a mixed solvent wherein ethylene carbonate and diethyl carbonate of non-aqueous solvent were mixed at a volume ratio of 3:7.

### (Comparative Example 2)

In Comparative Example 2, a non-aqueous electrolyte secondary battery of Comparative Example 2 was fabricated in the same manner as Example 1 except that the type of non-aqueous electrolyte was changed from that of Example 1.

In Comparative Example 2, a non-aqueous electrolyte was prepared by dissolving lithium hexafluorophosphate LiPF₆ as a solute at a proportion of 1 mol/liter in a mixed solvent wherein ethylene carbonate and diethyl carbonate of non-aqueous solvent were mixed at a volume ratio of 3:7. Further, 2 mass % of vinylene carbonate having no fluorine combined was added to the non-aqueous electrolyte. In such a case, the mass ratio of vinylene carbonate to the non-aqueous electrolyte excluding lithium salt was 2.2 mass %.

Next, under a temperature condition of 25 °C, each of the non-aqueous electrolyte secondary batteries of Examples 1 to 15 and Comparative Examples 1 and 2 was charged at a charge current of 1.2 mA until a battery voltage became 4.2V, charged at constant-voltage of 4.2 V until the charge current became 0.12 mA, and then discharged at a discharge current of 1.2 mA until a discharge stopping voltage became 2.5 V. This charging and discharging cycle was repeated 100 times. Then, the charge-discharge cycle was repeated to obtain a discharging capacity Q₁₀₀ at the hundredth cycle. The results were shown in table 1 below.

Each of the non-aqueous electrolyte secondary batteries of Examples 1 to 15 and Comparative Examples 1 and 2 was dismantled after finishing discharge of the first cycle and the hundredth cycle. Then, each of the non-aqueous electrolyte secondary batteries was measured for thickness of the negative electrode at the first cycle and the hundredth cycle by SEM (scanning transmission electron microscope), and there was calculated a magnification t₁₀₀/t₁ of the thickness of the negative electrode at the hundredth cycle t₁₀₀ to the thickness of the negative electrode at the first cycle t₁. The results were shown in Table 1 below.

**[Table 1]**

| | Q₁₀₀ (mAh) | t₁₀₀/t₁ |
|---|---|---|
| Example 1 | 1.50 | 3.2 |
| Example 2 | 1.45 | 4.0 |
| Example 3 | 1.30 | 4.1 |
| Example 4 | 1.30 | 4.2 |
| Example 5 | 1.20 | 4.0 |
| Example 6 | 1.35 | 4.0 |
| Example 7 | 1.45 | 3.0 |
| Example 8 | 1.20 | 3.5 |
| Example 9 | 1.85 | 3.0 |
| Example 10 | 1.15 | 3.2 |
| Example 11 | 1.20 | 2.0 |
| Example 12 | 1.15 | 2.5 |
| Example 13 | 1.15 | 2.5 |
| Example 14 | 1.75 | 2.0 |
| Example 15 | 1.59 | 2.0 |
| Comparative Example 1 | 0.83 | 6.2 |
| Comparative Example 2 | 1.59 | 5.0 |

The results demonstrate that, in each of the non-aqueous electrolyte secondary batteries of Examples 1 to 15 comprising the non-aqueous electrolyte containing the compound expressed by the general formula (I), expansion of the negative electrode was more restricted than in each of the non-aqueous electrolyte secondary batteries of Comparative Examples 1 and 2 comprising the non-aqueous electrolyte wherein the compound expressed by the general formula (I) was not contained. Further, each of the non-aqueous electrolyte secondary batteries of Examples 1 to 15 showed a higher discharge capacity at the hundredth cycle Q₁₀₀, and exhibited a remarkable improvement in charge-discharge cycle performances, as compared with the non-aqueous electrolyte secondary battery of Comparative Example 1.

### BRIEF DESCRIPTION OF THE DRAWINGS

Fig. 1 is a typical view showing a condition of a negative electrode used in Examples 1 to 14 and Comparative Examples 1 and 2 of the invention; and
Fig. 2 is a schematic cross-sectional view illustrating a non-aqueous electrolyte secondary battery fabricated in Examples 1 to 14 and Comparative Examples 1 and 2.

### DESCRIPTION OF NUMERAL SIGNS

- 1: positive electrode
- 1a: positive electrode current collector
- 2: negative electrode
- 2a: negative electrode active material
- 2b: negative electrode current collector
- 2c: slits
- 3: separator
- 4: battery can
- 4a: positive electrode can
- 4b: negative electrode can
- 5: insulative packing

## Claims

1. A non-aqueous electrolyte secondary battery comprising
a negative electrode containing a thin film of negative electrode active material including a metal capable of absorbing or releasing lithium formed on a current collector;
a positive electrode containing a positive electrode active material capable of absorbing or releasing lithium; and
a non-aqueous electrolyte prepared by dissolving lithium salt in a non-aqueous solvent;
wherein the thin film of negative electrode active material is separated into columnar shape by slits formed in a thickness direction, and
wherein the non-aqueous electrolyte contains a compound expressed by a general formula (I) below. 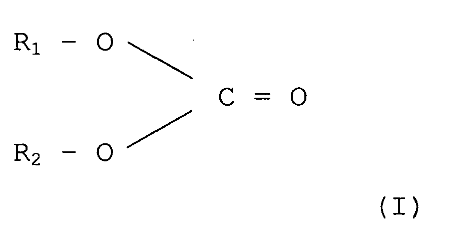 (In the formula, R₁ and R₂ are alkyl group containing non-substituents or various types of substituents. One or more fluorine is combined with either of R₁ or R₂ at least. R₁ and R₂ may be the same group or different from each other. Further, R₁ and R₂ may either be independent group or combined with each other wound in a ring.)

2. The non-aqueous electrolyte secondary battery according to claim 1, wherein the thin film of negative electrode active material comprises materials selected from silicon and its alloy and tin and its alloy.

3. The non-aqueous electrolyte secondary battery according to claim 1, wherein the slits formed in the thickness direction of the thin film of negative electrode active material is formed on and after a first time of charge-discharge performances.

4. The non-aqueous electrolyte secondary battery according to claim 1, wherein R₁ and R₂ of the general formula (I) are combined with each other and alkylene fluoride group having a number of carbon in a range of 2 to 6 is formed.

5. The non-aqueous electrolyte secondary battery according to claim 4, wherein a compound containing alkylene fluoride group wherein R₁ and R₂ of the general formula (I) are combined with each other is contained in a range of 0.1 to 10 mass % with respect to a mass of the non-aqueous electrolyte excluding lithium salt.

6. The non-aqueous electrolyte secondary battery according to claim 4, wherein the compound containing alkylene fluoride group wherein R₁ and R₂ of the general formula (I) are combined with each other is fluoro ethylene carbonate.

7. The non-aqueous electrolyte secondary battery according to claim 1, wherein R₁ and R₂ of the general formula (I) are independent group and at least one of R₁ and R₂ is chained alkyl fluoride group having a number of carbon in a range of 1 to 4.

8. The non-aqueous electrolyte secondary battery according to claim 1, wherein one or more of solvent selected from a group of lactone compound, cyclic carbonate, chained carbonate, chained carboxylic acid ester, and ether wherein each total number of carbon is in a range of 3 to 9 is contained as the non-aqueous solvent in the non-aqueous electrolyte, and a total amount of the compound expressed by the general formula (I), said lactone compound, said cyclic carbonate, said chained carbonate, said chained carboxylic acid ester, and said ether is not less than 90 mass % with respect to the mass of the non-aqueous electrolyte excluding lithium salt.

9. The non-aqueous electrolyte secondary battery according to claim 8, a total amount of the cyclic carbonate and the lactone compound is not less than 20 mass % with respect to the mass of the non-aqueous electrolyte excluding lithium salt.

10. The non-aqueous electrolyte secondary battery according to claim 8, wherein said lactone compound is one or more selected from a group of γ-butyrolactone, γ-valerolactone, and δ-valerolactone, and said cyclic carbonate is one or more selected from a group of ethylene carbonate, propylene carbonate and butylene carbonate, and said chained carbonate is one or more selected from a group of dimethyl carbonate, diethyl carbonate and ethyl methyl carbonate.

11. The non-aqueous electrolyte secondary battery according to claim 1, wherein one or more of lithium salt selected from LiBF₄ and LiPF₆ is contained as the lithium salt in a ratio of not less than 5 mol % with respect to total lithium salt in the non-aqueous electrolyte.

12. The non-aqueous electrolyte secondary battery according to claim 1, wherein materials constituting the current collector in the negative electrode are at least one selected from copper, nickel, stainless steel, molybdenum, tungsten and tantalum.

13. The non-aqueous electrolyte secondary battery according to claim 1, wherein the current collector in the negative electrode has a thickness of within a range of 1 µm to 30 µm.

14. The non-aqueous electrolyte secondary battery according to claim 1, wherein the current collector in the negative electrode has surface roughness Ra of not less than 0.01 µm.

15. The non-aqueous electrolyte secondary battery according to claim 1, wherein the current collector in the negative electrode comprises an electrolytic copper foil having a roughen surface.

16. The non-aqueous electrolyte secondary battery according to claim 1, wherein components of the current collector are diffused in the thin film of negative electrode active material in the negative electrode.

17. The non-aqueous electrolyte secondary battery according to claim 16, wherein the thin film of negative electrode active material consists of silicon and the components of the current collector diffused in the thin film of negative electrode active material forms a solid solution without forming an inter-metal compound with silicon.

18. The non-aqueous electrolyte secondary battery according to claim 1, wherein the thin film of negative electrode active material comprises tin, and a mixed layer consisting of the components of the current collector and tin components of the thin film of negative electrode active material is formed between the thin film of negative electrode active material and the current collector.

19. A non-aqueous electrolyte secondary battery comprising a negative electrode containing a thin film of negative electrode active material including a metal capable of absorbing or releasing lithium formed on a current collector; a positive electrode containing a positive electrode active material capable of absorbing or releasing lithium; and a non-aqueous electrolyte prepared by dissolving lithium salt in a non-aqueous solvent; wherein the thin film of negative electrode active material is separated into columnar shape by slits formed in a thickness direction, and wherein the non-aqueous electrolyte contains the compound expressed by the general formula (I) as claimed in claim 1.
